# EUROPÄISCHE PATENTSCHRIFT

(11) **EP 2 585 358 B1**
(45) Veröffentlichungstag und Bekanntmachung des Hinweises auf die Patenterteilung: **25.09.2013**
(21) Anmeldenummer: 11712477.6
(22) Anmeldetag: 29.03.2011
(51) Int. Cl.: B62D 6/00, B62D 137/00

(54) **VERFAHREN ZUM ELEKTROMECHANISCHEN EINSTELLEN EINES LENKWINKELS UND KRAFTFAHRZEUG MIT EINER ELEKTROMECHANISCHEN LENKUNG**
METHOD FOR ELECTROMECHANICALLY SETTING A STEERING ANGLE AND MOTOR VEHICLE COMPRISING AN ELECTROMECHANICAL STEERING SYSTEM
PROCÉDÉ DE RÉGLAGE ÉLECTROMÉCANIQUE D'UN ANGLE DE DIRECTION ET VÉHICULE AUTOMOBILE MUNI D'UNE DIRECTION ÉLECTROMÉCANIQUE

(30) Priorität: 28.06.2010 DE 102010025353
(43) Veröffentlichungstag der Anmeldung: 01.05.2013
(73) Patentinhaber: Audi AG, 85045 Ingolstadt (DE)
(72) Erfinder: MEISSNER, Tim, 85053 Ingolstadt (DE); WEIN, Michael, 92358 Seubersdorf (DE); REUTER, Mirko, 85221 Dachau (DE)
(86) Internationale Anmeldenummer: PCT/EP2011/001559
(87) Internationale Veröffentlichungsnummer: WO 2012/000574

(56) Entgegenhaltungen:
- EP-A1- 1 516 800
- GB-A- 2 437 503

## Beschreibung

Die Erfindung betrifft ein Verfahren zum elektromechanischen Einstellen eines Lenkwinkels der im Oberbegriff des Patentanspruchs 1 angegebenen Art. Die Erfindung betrifft auch ein Kraftfahrzeug der im Oberbegriff des Patentanspruchs 5 angegebenen Art.

Für moderne Kraftfahrzeuge ist der Einsatz elektromechanischer Lenksysteme beschrieben. Bei diesen unterscheidet man so genannte "steer by wire"-Lenksysteme von Lenksystemen mit einem Überlagerungsgetriebe.

Durch erstere kann eine Lenkvorgabe des Fahrers am Lenkrad mittels eines Sensors festgestellt und dann mittels eines elektromechanischen Aktors ausschließlich elektrisch ausgeführt werden. Es ist auch möglich, der Lenkvorgabe des Fahrers einen Zusatzlenkwinkel hinzuzufügen, um die Stabilität des Kraftfahrzeugs in bestimmten Fahrsituationen zu erhöhen.

Bei Lenksystemen mit Überlagerungsgetrieben kann die Lenkvorgabe des Fahrers durch einen so genannten Überlagerungslenkwinkel überlagert werden. Dieser wird in der Regel durch einen elektrischen Steller eingestellt. Der Lenkwinkel besteht dann aus dem vom Fahrer vorgegebenen Lenkradwinkel und dem Überlagerungslenkwinkel.

Ein Verfahren zum elektromechanischen Einstellen eines Lenkwinkels gemäß dem Oberbegriff des Patentanspruchs 1 ist beispielsweise durch die WO 2004/087486 offenbart.

Die EP 1 516 800 A1 beschreibt ein Verfahren zur Kompensation eines Giermoments eines Kraftfahrzeugs aufgrund unterschiedlicher Raddrehzahlen. Die unterschiedlichen Raddrehzahlen können beispielsweise infolge unterschiedlicher Bremskräfte oder infolge eines asymmetrischen Antriebsschlupfs entstehen. Zur Kompensation des Giermoments wird ein Zusatzlenkwinkel aufgebracht, der von einer Vorgabe des Fahrers unabhängig ist.

Die GB 2 437 503 A betrifft ein fahrerloses Kraftfahrzeug mit einem redundant ausgelegten Lenksystem. Die Lenkung wird hier einerseits durch den Eingriff eines Motors in die Spurstange und andererseits durch die Anpassung des Drehmoments der Antriebsräder ermöglicht.

Für moderne Kraftfahrzeuge mit elektrischem Antrieb der Räder ist außerdem bekannt, dass unterschiedliche Räder durch verschiedene elektrische Kraftmaschinen des Kraftfahrzeugs angetrieben werden können. Fällt bei derartigen Kraftfahrzeugen nun beispielsweise einer dieser Antriebsmotoren aus, so führt das Kraftfahrzeug eine Gierbewegung aus. Dies vermindert die Fahrsicherheit und den Fahrkomfort, da der Fahrer aktiv gegenlenken muss, um die ursprüngliche Fahrtrichtung beibehalten zu können.

Es ist deshalb Aufgabe der vorliegenden Erfindung, ein Verfahren zum elektromechanischen Einstellen eines Lenkwinkels der eingangs genannten Art bereitzustellen, durch welches die Fahrsicherheit und der Fahrkomfort vergrößert werden.

Diese Aufgabe wird durch ein Verfahren mit den Merkmalen des Patentanspruchs 1 bzw. durch ein Kraftfahrzeug mit den Merkmalen des Patentanspruchs 3 gelöst.

Um Beeinträchtigungen im Fahrkomfort und bei der Fahrsicherheit - beispielsweise beim Ausfall eines Antriebsmotors - zu verhindern bzw. zu reduzieren, wird in dem erfindungsgemäßen Verfahren zum elektromechanischen Einstellen eines Lenkwinkels der Zusatzlenkwinkel in Abhängigkeit von einem Betriebszustand von zumindest zwei Kraftmaschinen, die auf zwei unterschiedliche, bezüglich einer Fahrzeuglängsachse einander gegenüberliegende Räder arbeiten, und/oder zumindest einer diesen Betriebszustand wiedergebenden Größe festgelegt. Der Zusatzlenkwinkel wird hierdurch besser an aktuelle Fahrsituationen angepasst, so dass das Kraftfahrzeug komfortabler lenkbar und die Fahrsicherheit vergrößert ist. Außerdem wird eine Ausführungsform möglich, bei der es dem Fahrer erleichtert wird, einer unerwünschten Gierbewegung des Kraftfahrzeugs, welche auf einem ungleich starken Antreiben unterschiedlicher Räder - beispielsweise aufgrund des Ausfalls eines Antriebsmotors - beruht, entgegenzuwirken. Der Fahrer muss also lediglich zu Beginn des Lenkvorgangs weiterhin den zum Ausgleich der Gierbewegung erforderlichen Lenkwinkel durch Betätigen des Lenkrads einstellen. Hierdurch sind der Fahrkomfort und die Fahrsicherheit des Kraftfahrzeugs besonders groß.

Der Betriebszustand der Kraftmaschine wird bei modernen Kraftfahrzeugen in der Regel durch geeignete Steuereinheiten überwacht bzw. festgestellt. Ein derart festgestellter aktueller Betriebszustand kann nun beispielsweise durch Aussenden entsprechender Daten von der Kraftmaschine zu einer Steuereinheit der elektromechanischen Lenkung übermittelt werden.

Die den Betriebszustand der Kraftmaschinen wiedergebende Größe ist erfindungsgemäß ein auf eine Radachse wirkendes Drehmoment. Dieses kann beispielsweise durch geeignete Sensoren gemessen werden. Mittels des Drehmoments ist der aktuelle Betriebszustand der Kraftmaschine auf einfache Weise feststellbar.

Alternativ oder zusätzlich kann das Drehmoment auch aus dem Betriebszustand der elektrischen Kraftmaschine abgeleitet werden, da in der Regel bekannt ist, welcher Betriebszustand der elektrischen Kraftmaschine welches Drehmoment der Radachsen bewirkt.

Die Größe des Zusatzlenkwinkels kann nun in Abhängigkeit von einer Unterschiedlichkeit zweier Drehmomente, welche an jeweiligen Radachsen zweier bezüglich einer Längsachse des Kraftfahrzeugs einander gegenüberliegender Räder wirken, festgelegt werden. Ist der Betriebszustand zweier verschiedener Kraftmaschinen, welche unterschiedliche Räder antreiben, verschmieden, so spiegelt sich das in der Unterschiedlichkeit der Drehmomente wider. Es kann also einfach festgestellt werden, welche Unterstützungskraft notwendig ist, um eine auf ungleichen Betriebszuständen der Kraftmaschine beruhenden unerwünschten Gierbewegung des Kraftfahrzeugs entgegenzuwirken.

Die Größe des Zusatzlenkwinkels wird erfindungsgemäß in Abhängigkeit von einer Querbeschleunigung des Kraftfahrzeugs, einer Gierrate des Kraftfahrzeugs und dem von dem Fahrer mittels der Lenkhandhabe des Kraftfahrzeugs vorgegebenen Lenkwinkel festgelegt. Der Zusatzlenkwinkel kann dann so berechnet werden, dass ein durch verschiedene Betriebszustände der Kraftmaschinen bzw. ungleich große Drehmomente verursachtes Giermoment kompensierbar ist.

Ein erfindungsgemäßes Kraftfahrzeug weist zumindest zwei Kraftmaschinen auf, die auf zwei unterschiedliche, bezüglich einer Längsachse einander gegenüberliegende Rädern arbeiten. Das Kraftfahrzeug umfasst des Weiteren eine elektromechanische Lenkung zum Einstellen eines Lenkwinkels. Durch diese ist einem von einem Fahrer mittels einer Lenkhandhabe vorgegebenen Lenkwinkel ein Zusatzlenkwinkel überlagerbar oder hinzufügbar. Hierfür umfasst die elektromechanische Lenkung eine Steuereinheit, welche dazu ausgelegt ist, den Zusatzlenkwinkel in Abhängigkeit von dem Betriebszustand wenigstens einer Kraftmaschine zum Antreiben eines Rades des Kraftfahrzeugs und/oder zumindest einer diesen Betriebszustand wiedergebenden Größen zu berechnen. Ein Aktor der elektromechanischen Lenkung wird dann derart angesteuert, dass dieser Zusatzlenkwinkel beim Einstellen des Lenkwinkels den vom Fahrer mittels der Lenkhandhabe vorgegebenen Lenkwinkel überlagert beziehungsweise diesem hinzugefügt wird, wobei die den Betriebszustand der Kraftmaschinen wiedergebende Größe ein auf eine Radachse wirkendes Drehmoment ist. Der Zusatzlenkwinkel ist hierdurch sehr gut an eine aktuelle Fahrsituation anpassbar. Das Kraftfahrzeug ist komfortabler lenkbar und die Fahrsicherheit vergrößert. Außerdem wird eine Ausführungsform möglich, bei welcher eine auf unterschiedlichen Betriebszuständen verschiedener Kraftmaschinen beruhende Gierbewegung des Kraftfahrzeugs auf komfortable Weise ausgeglichen wird. Der Fahrer muss keine Ausgleichlenkbewegungen durchführen, wodurch die Fahrsicherheit vergrößert ist.

Die Steuereinheit kann dazu ausgelegt sein, den Zusatzlenkwinkel derart zu berechnen, dass ein von dem Betriebszustand der wenigstens einen Kraftmaschine abhängiges Giermoment durch den Zusatzlenkwinkel kompensierbar ist. Der Fahrer kann den von ihm an der Lenkhandhabe vorgegebenen Lenkwinkel beibehalten, da der Zusatzlenkwinkel der Gierbewegung des Kraftfahrzeugs entgegenwirkt.

Erfindungsgemäß weist das Kraftfahrzeug Mittel zum Messen und/oder Berechnen einer aktuellen Querbeschleunigung des Kraftfahrzeugs sowie einer Gierrate des Kraftfahrzeugs auf. Es umfasst des Weiteren einen Lenkwinkelsensor zum Feststellen eines von dem Fahrer mittels der Lenkhandhabe vorgegebenen Lenkwinkel. Die Steuereinheit ist in dieser Ausführungsform dazu ausgelegt, den Zusatzlenkwinkel in Abhängigkeit von der Gierrate, der Querbeschleunigung und dem vom Fahrer mittels der Lenkhandhabe vorgegebenen Lenkwinkel zu berechnen. Auf diese Weise kann das auf unterschiedlichen Antriebsmomenten basierende, auf das Kraftfahrzeug bei der Fahrt wirkende Giermoment einfach und genau kompensiert werden.

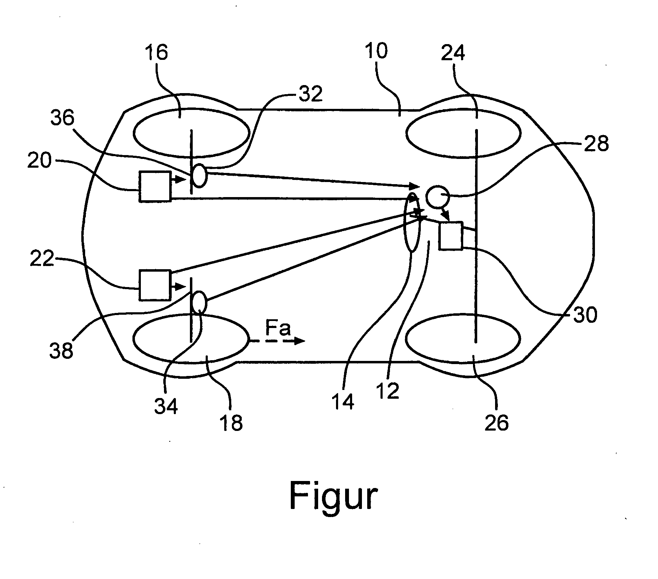

Nachfolgend wird eine bevorzugte Ausführungsform des erfindungsgemäßen Verfahrens bzw. des erfindungsgemäßen Kraftfahrzeugs unter Bezug auf die Zeichnung beschrieben, wobei die Figur in einer schematischen Darstellung ein Kraftfahrzeug mit einer elektromechanischen Lenkung veranschaulicht.

Ein Kraftfahrzeug 10 weist eine elektromechanische Lenkung 12 auf. Diese kann als Überlagerungslenkung ausgeführt sein, bei welcher -beispielsweise mittels eines in einen Lenkstrang eingefügten Getriebes - einem an einer Lenkhandhabe 14 von einem Fahrer vorgegebenen Lenkradwinkel ein durch einen Elektromotor bereitgestellter Zusatzlenkwinkel überlagerbar ist. Alternativ kann die elektromechanische Lenkung 12 auch als "steer by wire"-Lenksystem ausgeführt sein.

Zwei Hinterräder 16, 18 werden durch zwei verschiedene Elektromotoren 20, 22 angetrieben. Es ist vorstellbar, dass auch die Vorderräder 24, 26 durch weitere, verschiedene Elektromotoren angetrieben werden.

Fällt nun der Elektromotor 20 aus, so entsteht bei der Fahrt des Kraftfahrzeugs 10 ein Giermoment. Dessen Größe hängt von der von dem weiterhin angetriebenen Rad 18 erzeugten Antriebskraft Fa ab. Es ist auch möglich, dass der Elektromotor 20 nur teilweise ausfällt.

Der Ausfall des Elektromotors 20 kann beispielsweise durch eine spezielle, in an sich bekannter Weise ausgebildete Überwachungseinrichtung des Kraftfahrzeugs 10 festgestellt werden. Die Information über den aktuellen Betriebszustand des Elektromotors 20 wird dann von der Überwachungseinrichtung an eine Steuereinheit 28 der elektromechanischen Lenkung übermittelt. Durch diese wird dann der Zusatzlenkwinkel berechnet, durch welchen die durch den Ausfall des Elektromotors 20 entstehende Gierbewegung des Kraftfahrzeugs 10 bei der Fahrt kompensierbar ist.

Handelt es sich bei der elektromechanischen Lenkung 12 um eine Überlagerungslenkung, so veranlasst die Steuereinheit 28 in der Folge, dass dem von dem Fahrer mittels der Lenkhandhabe 14 vorgegebenen Lenkradwinkel der Zusatzlenkwinkel überlagert wird. Dies geschieht in an sich bekannter Weise mittels eines Überlagerungsgetriebes.

Handelt es sich bei der elektromechanischen Lenkung 12 um ein "steer by wire"-Lenksystem, so wird durch die Steuereinheit 28 der Zusatzlenkwinkel dem von dem Fahrer an der Lenkhandhabe 14 vorgegebenen Lenkradwinkel hinzugefügt und veranlasst, dass ein Aktor 30 der elektromechanischen Lenkung 12 den aus Lenkradwinkel und Zusatzlenkwinkel zusammengesetzten Lenkwinkel einstellt.

Der Fahrer kann dann in komfortabler Weise die gewünschte Fahrtrichtung beibehalten, ohne an der Lenkhandhabe 14 den Lenkradwinkel in Folge der Betriebsstörung des Elektromotors 20 zu verändern.

Zusätzlich oder alternativ kann auch durch Drehmomentsensoren 32, 34 festgestellt werden, wie groß jeweilige Drehmomente sind, welche durch die Elektromotoren 20, 22 in einer aktuellen Fahrsituation auf jeweilige Radachsen 36, 38 der Räder 16, 18 wirken. Die jeweils festgestellten Größen können dann ebenfalls von der Steuereinheit 28 dazu benutzt werden, die Größe des Zusatzlenkwinkels zu berechnen, welche notwendig ist, um eine auf unterschiedlichen Drehmomenten verschiedener Antriebsachsen beruhenden Gierbewegung des Kraftfahrzeugs 10 entgegenzuwirken.

## Patentansprüche

1. Verfahren zum elektromechanischen Einstellen eines Lenkwinkels an zumindest einer Radachse eines Kraftfahrzeugs (10), bei welchem ein Zusatzlenkwinkel einem durch einen Fahrer mittels einer Lenkhandhabe (14) vorgegebenen Lenkwinkel überlagert oder hinzugefügt wird, und der Zusatzlenkwinkel in Abhängigkeit von einem Betriebszustand von zumindest zwei Kraftmaschinen (20, 22), die auf zwei unterschiedliche, bezüglich einer Fahrzeuglängsachse einander gegenüberliegende Räder (16, 18) arbeiten, und zumindest einer diesen Betriebszustand wiedergebenden Größe festgelegt wird,
**dadurch gekennzeichnet, dass**
die den Betriebszustand der Kraftmaschinen (20, 22) wiedergebende Größe ein auf eine Radachse (36, 38) wirkendes Drehmoment ist, und die Größe des Zusatzlenkwinkels in Abhängigkeit von einer Querbeschleunigung des Kraftfahrzeugs (10), einer Gierrate des Kraftfahrzeugs (10) und dem von dem Fahrer mittels der Lenkhandhabe (14) des Kraftfahrzeugs (10) vorgegebenen Lenkwinkel festgelegt wird.

2. Verfahren nach Anspruch 1,
**dadurch gekennzeichnet, dass**
die Größe des Zusatzlenkwinkels in Abhängigkeit von einer Unterschiedlichkeit zweier Drehmomente festgelegt wird, welche an jeweiligen Radachsen (36, 38) zweier bezüglich einer Längsachse des Kraftfahrzeugs (10) einander gegenüberliegenden Räder (16, 18) wirken.

3. Kraftfahrzeug (10) mit zumindest zwei Kraftmaschinen (20, 22), die auf zwei unterschiedliche, bezüglich einer Fahrzeuglängsachse einander gegenüberliegende Räder (16, 18) arbeiten, und mit einer elektromechanischen Lenkung (12) zum Einstellen eines Lenkwinkels, mittels welcher einem von einem Fahrer mittels einer Lenkhandhabe (14) vorgegebenen Lenkwinkel ein Zusatzlenkwinkel überlagerbar oder hinzufügbar ist, und die elektromechanische Lenkung (12) zumindest eine Steuereinheit (28) umfasst, welche dazu ausgelegt ist, den Zusatzlenkwinkel in Abhängigkeit von dem Betriebszustand der Kraftmaschinen (20, 22) und zumindest einer diesen Betriebszustand wiedergebenden Größe zu berechnen und einen Aktor derart anzusteuern, dass beim Einstellen des Lenkwinkels dieser Zusatzlenkwinkel dem von dem Fahrer mittels der Lenkhandhabe (14) vorgegebenen Lenkwinkel überlagert oder hinzugefügt wird,
**dadurch gekennzeichnet, dass**
die den Betriebszustand der Kraftmaschinen (20, 22) wiedergebende Größe ein auf eine Radachse (36, 38) wirkendes Drehmoment ist, und das Kraftfahrzeug (10) Mittel zum Messen und/oder Berechnen einer aktuellen Querbeschleunigung des Kraftfahrzeugs (10) sowie einer Gierrate des Kraftfahrzeugs (10) und einen Lenkwinkelsensor zum Feststellen eines von einem Fahrer mittels einer Lenkhandhabe (14) vorgegebenen Lenkwinkels umfasst, wobei die Steuereinheit (28) dazu ausgelegt ist, den Zusatzlenkwinkel in Abhängigkeit von der Gierrate, der Querbeschleunigung und dem vom Fahrer mittels der Lenkhandhabe (14) vorgegebenen Lenkwinkel zu berechnen.

4. Kraftfahrzeug (10) nach Anspruch 3,
**dadurch gekennzeichnet, dass**
die Steuereinheit (28) dazu ausgelegt ist, den Zusatzlenkwinkel derart zu berechnen, dass ein von dem Betriebszustand Kraftmaschinen (20, 22) abhängiges Giermoment durch den Zusatzlenkwinkel kompensierbar ist.

## Claims

1. Method for the electromechanical adjustment of a steering angle on at least one wheel axle of a motor vehicle (10), in which an auxiliary steering angle is superposed on or added to a steering angle predetermined by a driver by means of a steering handle (14), and the auxiliary steering angle is established according to an operating state of at least two engines (20, 22) operating on two different wheels (16, 18) which are mutually opposite with respect to a vehicle longitudinal axis, and at least one parameter representing this operating state is established, **characterised in that** the parameter representing the operating state of the engines (20, 22) is a torque acting on a wheel axle (36, 38), and the parameter of the auxiliary steering angle is established according to a transverse acceleration of the motor vehicle (10), a yaw rate of the motor vehicle (10) and the steering angle predetermined by the driver by means of the steering handle (14) of the motor vehicle (10).

2. Method according to claim 1, **characterised in that** the parameter of the auxiliary steering angle is established according to a difference between two torques which act on each of the wheel axles (36, 38) of two wheels (16, 18) which are mutually opposite with respect to a longitudinal axis of the motor vehicle (10).

3. Motor vehicle (10) comprising at least two engines (20, 22) operating on two different wheels (16, 18) which are mutually opposite with respect to a vehicle longitudinal axis, and comprising an electromechanical steering system (12) for adjusting a steering angle, by means of which steering system an auxiliary steering angle can be superposed on or added to a steering angle predetermined by a driver by means of a steering handle (14), and the electromechanical steering system (12) comprises at least one control unit (28), which is configured to calculate the auxiliary steering angle according to the operating state of the engines (20, 22) and at least one parameter representing this operating state and to actuate an actuator in such a way that when adjusting the steering angle, this auxiliary steering angle is superposed on or added to the steering angle predetermined by the driver by means of the steering handle (14), **characterised in that** the parameter representing the operating state of the engines (20, 22) is a torque acting on a wheel axle (36, 38), and the motor vehicle (10) comprises means for measuring and/or calculating both a current transverse acceleration of the motor vehicle (10) and a yaw rate of the motor vehicle (10), and comprises a steering angle sensor for establishing a steering angle predetermined by a driver by means of a steering handle (14), the steering unit (28) being configured to calculate the auxiliary steering angle according to the yaw rate, the transverse acceleration and the steering angle predetermined by the driver by means of the steering handle (14).

4. Motor vehicle (10) according to claim 3, **characterised in that** the steering unit (28) is configured to calculate the auxiliary steering angle in such a way that a yawing moment dependent on the operating state of the engines (20, 22) can be compensated by the auxiliary steering angle.

## Revendications

1. Procédé de réglage électromécanique d'un angle de direction sur au moins un essieu de roue d'un véhicule automobile (10), dans lequel un angle de direction d'appoint est superposé ou ajouté à un angle de direction prédéfini par un conducteur au moyen d'une manette de direction (14) et l'angle de direction est fixé en fonction d'un état de fonctionnement d'au moins deux moteurs (20, 22), qui opèrent sur deux roues différentes (16, 18) mutuellement opposées par rapport à un axe longitudinal du véhicule, et d'au moins une grandeur reproduisant cet état de fonctionnement,
**caractérisé en ce que** :
la grandeur reproduisant l'état de fonctionnement des moteurs (20, 22) est un moment de torsion agissant sur un essieu de roue (36, 38) et la grandeur de l'angle de direction d'appoint est fixée en fonction d'une accélération transversale du véhicule automobile (10), de la vitesse de lacet du véhicule automobile (10) et de l'angle de direction prédéfini par le conducteur au moyen de la manette de direction (14) du véhicule automobile (10).

2. Procédé selon la revendication 1,
**caractérisé en ce que** :
la grandeur de l'angle de direction d'appoint est fixée en fonction d'une différence de deux moments de torsion, qui agissent sur les essieux respectifs (36, 38) de deux roues (16, 18) mutuellement opposées par rapport à un axe longitudinal du véhicule automobile (10).

3. Véhicule automobile (10) comprenant au moins deux moteurs (20, 22), qui opèrent sur deux roues différentes (16, 18) mutuellement opposées par rapport à un axe longitudinal du véhicule, et une direction électromécanique (12) pour régler un angle de direction, au moyen de laquelle un angle de direction d'appoint peut être superposé ou ajouté à un angle de direction prédéfini par un conducteur au moyen d'une manette de direction (14), et la direction électromécanique (12) comprend au moins une unité de commande (28) qui est dimensionnée de manière à calculer l'angle de direction d'appoint en fonction de l'état de fonctionnement des moteurs (20, 22) et d'au moins une grandeur reproduisant cet état de fonctionnement, et à commander un actionneur de sorte que, lors du réglage de l'angle de direction, cet angle de direction d'appoint soit superposé ou ajouté à l'angle de direction prédéfini par le conducteur au moyen de la manette de direction (14),
**caractérisé en ce que** :
la grandeur reproduisant l'état de fonctionnement des moteurs (20, 22) est un moment de torsion agissant sur un essieu de roue (36, 38) et le véhicule automobile comprend des moyens pour mesurer et/ou calculer une accélération transversale courante du véhicule automobile (10) ainsi qu'une vitesse de lacet du véhicule automobile (10), et un capteur d'angle de direction pour fixer un angle de direction prédéfini par un conducteur au moyen d'une manette de direction (14), dans lequel l'unité de commande (28) est dimensionnée pour calculer l'angle de direction d'appoint en fonction de la vitesse de lacet, de l'accélération transversale et de l'angle de direction prédéfini par le conducteur au moyen de la manette de direction (14).

4. Véhicule automobile (10) selon la revendication 3, **caractérisé en ce que** :
l'unité de commande (28) est dimensionnée pour calculer l'angle de direction d'appoint de sorte qu'un moment de lacet dû à l'état de fonctionnement des moteurs (20, 22) puisse être compensé par l'angle de direction d'appoint.
